# EUROPÄISCHE PATENTANMELDUNG

(11) **EP 4 088 957 A1**
(43) Veröffentlichungstag der Anmeldung: **16.11.2022**
(21) Anmeldenummer: 22172418.0
(22) Anmeldetag: 09.05.2022
(51) Int. Cl.: B60H 1/24, B60H 1/00

(54) **EINBAURAHMENELEMENT MIT ZWANGSENTLÜFTUNG**

(30) Priorität: 10.05.2021 DE 102021112190
(71) Anmelder: Dethleffs GmbH & Co. KG, 88316 Isny (DE)
(72) Erfinder: Plische, Erik, 87547 Missen-Willhams (DE); Schuster, Thomas, 88138 Hergenweiler (DE)
(74) Vertreter: Waller, Stefan

(57) **Zusammenfassung**

Die Erfindung betrifft ein Einbaurahmenelement (100) mit Zwangsentlüftung eines Innenraums (120) eines Freizeitfahrzeugs (140), wobei das Einbaurahmenelement (100) Teil eines Einbaurahmens (102) für ein Hubdach (142) des Freizeitfahrzeugs (140) ist; und wobei das Einbaurahmenelement (100) aufweist:
eine erste Kammer (160) aufweisend: eine erste Wandung (162), welche Teil einer Außenwandung (104) des Einbaurahmenelements (100) ist und in welcher mindestens eine erste Entlüftungsöffnung (164) angeordnet ist; und eine zweite Wandung (166), in welcher eine zweite Entlüftungsöffnung (168) angeordnet ist, welche bei bestimmungsgemäßem Gebrauch des Einbaurahmenelements (100) die erste Kammer (160) mit einem Innenraum (144) des Freizeitfahrzeugs (140) verbindet; wobei die erste Kammer (160) so ausgeführt und eingerichtet ist, dass bei bestimmungsgemäßem Gebrauch des Einbaurahmenelements (100) Luft von dem Innenraum (144) des Freizeitfahrzeugs (140) durch die zweite Entlüftungsöffnung (168) der zweiten Wandung (166) der ersten Kammer und durch die mindestens eine Entlüftungsöffnung (164) der ersten Wandung (162) nach außerhalb des Freizeitfahrzeugs (140) strömen kann.

## Beschreibung

Die Erfindung betrifft ein Einbaurahmenelement mit Zwangsentlüftung eines Innenraums eines Freizeitfahrzeugs, einen Einbaurahmen für ein Hubdach eines Freizeitfahrzeugs mit einem solchen Einbaurahmenelement sowie ein Freizeitfahrzeug mit einem solchen Einbaurahmenelement und/oder einen solchen Einbaurahmen.

Im Stand der Technik sind Freizeitfahrzeuge bekannt. Unter einem Freizeitfahrzeug wird ein Fahrzeug oder Anhänger verstanden, welches oder welcher zumindest ein mobil einsetzbares Element zum Camping aufweist oder zumindest temporär eine Einrichtung zum Campen aufweisen kann. Unter einem Freizeitfahrzeug wird insbesondere ein Campingfahrzeug verstanden. Unter einem Freizeitmobil wird ein motorisiertes Freizeitfahrzeug verstanden. Unter einem Campingfahrzeug wird vorliegend ein Wohnmobil oder ein Wohnwagen verstanden, also vorzugsweise diejenigen Fahrzeuge oder Anhänger, bei denen ein Nutzer eine Möglichkeit zum Schlafen oder Wohnen in diesem Fahrzeug hat. Eine Motorisierung der Fahrzeuge ist nicht erforderlich. Eine andere Bezeichnung für ein Wohnmobil ist zum Beispiel ein Reisemobil. Ein Wohnwagen kann zum Beispiel alternativ als Caravan oder Campinganhänger bezeichnet werden. Unter einem Campervan wird vorliegend ein Freizeitfahrzeug, insbesondere Freizeitmobil, verstanden, welches aus einem Transportfahrzeug mit serienmäßiger Karosserie gebildet ist, insbesondere einer Blechkarosserie.

Für Freizeitfahrzeuge, insbesondere Reisemobile, gibt es gesetzliche Vorschriften, welche eine maximale Konzentration von Kohlendioxid im Inneren des Freizeitfahrzeugs vorschreiben. Kohlendioxid- und Kohlenmonoxid entstehen im Freizeitfahrzeug unter anderem durch Atemluft, insbesondere nachts beim Schlafen, Kochen und / oder dem Heizungsbetrieb. Bei Freizeitfahrzeugen des Stands der Technik wird in der Regel vorausgesetzt, dass Fenster geöffnet werden und offenbleiben, um die Konzentration von Kohlendioxid und/oder Kohlenmonoxid im Inneren des Freizeitfahrzeugs zu reduzieren.

Im Stand der Technik ist es ferner bekannt, Kohlendioxid- und/oder Kohlenmonoxid-Ansammlungen in Freizeitfahrzeugen mit Schlafdach mithilfe eines elektrischen Ansaugsystems nach außen abzuleiten.

Eine Aufgabe der vorliegenden Erfindung liegt darin, den Stand der Technik zu verbessern. Es ist insbesondere eine Aufgabe der Erfindung, eine Konzentration von Kohlendioxid- und / oder Kohlenmonoxid im Inneren des Freizeitfahrzeugs in einfacher Art und Weise, d. h. mit einfachen Mitteln, zu reduzieren. Eine weitere Aufgabe der Erfindung liegt darin, dass eine erfindungsgemäße Lösung ressourcenschonend und / oder kostengünstig realisierbar ist.

Diese Aufgabe wird durch ein Einbaurahmenelement mit den Merkmalen des unabhängigen Patentanspruchs 1 gelöst. Vorteilhafte Weiterbildungen der Erfindung sind in den Unteransprüchen angegeben.

Folgendes Begriffliche sei erläutert:
Unter einem Einbaurahmenelement kann vorliegend ein Teil eines Einbaurahmens verstanden werden, welcher insbesondere eine vorgegebene Funktion erfüllt.

Unter einem Einbaurahmen, auch Fertigbaurahmen genannt, wird ein Fertigbauteil oder ein Fertigteil verstanden, welches ohne weitere Bearbeitung in einem Endprodukt, insbesondere einem Hubdach eines Freizeitfahrzeuges, eingesetzt oder eingebaut werden kann. Bevorzugt kann das Einbaurahmenelement ein Formteil sein.

Bevorzugt kann das Einbaurahmenelement der Zwangsbelüftung und / oder der Zwangsentlüftung des Innenraums des Freizeitfahrzeugs dienen.

Unter einer Kammer wird vorliegend ein größtenteils oder vollständig abgeschlossener Hohlraum in einer Vorrichtung, vorliegend in dem Einbaurahmenelement, verstanden. Vorliegend ist die erste Kammer an dem Einbaurahmenelement halbseitig geöffnet und erst bei bestimmungsgemäßem Gebrauch an dieser Seite durch das Dach verschlossen.

Unter einer Außenwandung wird einer Wandung verstanden, welche angrenzend zur Außenseite, insbesondere des Freizeitfahrzeugs, liegt.

Unter einer Entlüftungsöffnung wird vorliegend eine Öffnung verstanden, mithilfe derer der Innenraum des Freizeitfahrzeugs entlüftet werden kann. Bevorzugt kann eine Entlüftungsöffnung auch zur Belüftung des Freizeitfahrzeugs verwendet werden.

Das Einbaurahmenelement wird bei bestimmungsgemäßem Gebrauch auf einem Dach eines Freizeitfahrzeugs als Teil eines Einbaurahmens für ein Hubdach des Freizeitfahrzeugs befestigt, insbesondere verklebt.

Durch das erfindungsgemäße Einbaurahmenelement wird vorteilhafterweise erreicht, dass der Innenraum des Freizeitfahrzeugs entlüftet werden kann, sodass die Konzentration von Kohlendioxid- und Kohlenmonoxid reduziert wird.

Bevorzugt weisen der Luftstrom durch die erste Wandung und der Luftstrom durch die zweite Wandung eine unterschiedliche Richtung auf. Hierdurch wird erreicht, dass der Hauptluftstrom aus dem Innenraum des Freizeitfahrzeugs durch die erste Kammer und aus der ersten Kammer heraus nach außerhalb des Freizeitfahrzeugs umgelenkt wird.

Gemäß einer bevorzugten Ausführungsform liegt ein Winkel zwischen einer Erstreckungsrichtung der ersten Wandung oder der Außenwandung in einer Einbauebene des Einbaurahmenelements und einer Erstreckungsrichtung der zweiten Wandung in der Einbauebene des Einbaurahmenelements zwischen 80° und 100°, und beträgt bevorzugt genau 90°.

Hierdurch wird vorteilhafterweise erreicht, dass ein Hauptluftstrom aus dem Innenraum des Freizeitfahrzeugs durch die erste Kammer und aus der ersten Kammer heraus nach außerhalb des Freizeitfahrzeugs deutlich umgelenkt wird.

Dies bewirkt vorteilhafterweise zusammen mit warmer Luft, welche in der Regel aus dem Innenraum des Freizeitfahrzeugs zum Hubdach nach oben steigt, dass der Innenraum des Freizeitfahrzeugs in der Regel durch das Einbaurahmenelement entlüftet wird.

Bevorzugt ist die Einbauebene des Einbaurahmenelements identisch mit der Ebene des Dachs des Freizeitfahrzeugs.

Bevorzugt ist die Erstreckungsrichtung der ersten Wandung oder der Außenwandung in der Einbauebene parallel zu einer Seite des Einbaurahmens. Bevorzugt ist die Erstreckungsrichtung der zweiten Wandung senkrecht zu der zuvor genannten Seite des Einbaurahmens oder der Außenwandung. Bevorzugt strömt dabei Luft aus dem Innenraum senkrecht zur Außenwandung, wird beim Eintritt in die erste Kammer in Richtung parallel zur Außenwandung umgelenkt und wird danach beim Austritt aus der ersten Kammer nach außen abermals senkrecht zur Außenwandung umgelenkt. Hierbei wird der Hauptluftstrom bevorzugt zweimal um jeweils 90° abgelenkt.

Gemäß einer anderen, bevorzugten Ausführungsform bildet das Einbaurahmenelement mindestens eine Seite, insbesondere genau eine Seite, des Einbaurahmens für ein Hubdach des Freizeitfahrzeugs. Bevorzugt weist das Einbaurahmenelement eine längliche Form auf. Bevorzugt weist der Einbaurahmen eine rechteckige Form auf, sodass der Einbaurahmen vier Seiten aufweist. Bevorzugt kann das Einbaurahmenelement mindestens ein Befestigungselement, insbesondere zwei Befestigungselemente, zur Befestigung des Einbaurahmenelements mit benachbarten Einbaurahmenelementen aufweisen.

Unterhalb der ersten Öffnung kann ein Bereich der Wandung angeordnet sein. Dadurch kann Wasser, das sich auf einem Dachblech stehend bei starken Regen bildet, nicht einströmen.

Gemäß einer weiteren, bevorzugten Ausführungsform liegt ein Winkel zwischen einer ersten Richtung, welche senkrecht zur ersten Wandung oder Außenwandung und parallel durch eine ersten Entlüftungsöffnung der mindestens einen ersten Entlüftungsöffnung verläuft, und einer zweiten Richtung, welche senkrecht zur zweiten Wandung und parallel durch die zweite Entlüftungsöffnung verläuft, zwischen 80° und 100°, und beträgt bevorzugt genau 90°.

Hierdurch wird vorteilhafterweise erreicht, dass ein Hauptluftstrom aus dem Innenraum des Freizeitfahrzeugs durch die erste Kammer und aus der ersten Kammer heraus nach außerhalb des Freizeitfahrzeugs umgelenkt wird. Weitere Vorteile dieses Merkmals wurden bereits obenstehend angegeben.

Gemäß noch einer weiteren, bevorzugten Ausführungsform weist ein Luftkanal, welcher eine mit dem Innenraum des Freizeitfahrzeugs verbundene Innenseite des Einbaurahmenelements mit einer außerhalb des Freizeitfahrzeugs befindliche Außenseite des Einbaurahmenelements verbindet, einen kleineren Querschnitt als eine Öffnung in einem unteren Teil, insbesondere im Fahrzeugboden, des Freizeitfahrzeugs auf.

Aufgrund des Bernoulli-Effekts oder Venturi-Effekts wird hierdurch vorteilhafterweise erreicht, dass die Luft durch die Öffnung mit dem kleineren Querschnitt im Einbaurahmenelement schneller strömt als durch die Öffnung in dem unteren Teil des Freizeitfahrzeugs. Unter dem Bernoulli-Effekt oder Venturi-Effekt versteht man die Abnahme des statischen Drucks in strömenden Fluiden mit zunehmender Strömungsgeschwindigkeit. Dies ist äquivalent dazu, dass bei gegebenem Volumenstrom sich die Fließgeschwindigkeit einer inkompressiblen Strömung umgekehrt proportional zum Rohrquerschnitt verhält.

Alternativ oder zusätzlich kann der Kamineffekt eine Luftströmung im Inneren des Freizeitfahrzeugs von unten nach oben bewirken bzw. verstärken. Der Kamineffekt ist ein physikalischer Effekt, der vertikal gerichtete Luftströmungen verursacht. Der Kamineffekt beruht auf der natürlichen Konvektion. Er wird unter anderem technisch genutzt, um Abgase von Feuerungen durch Schornsteine abzuführen. Warme Luft hat eine geringere Dichte als kalte Luft, wodurch eine thermische Konvektion entsteht und Luft nach oben und durch den Luftkanal im Einbaurahmenelement nach außen austritt. Das Wegströmen der Luft am unteren Ende des Luftkanals bewirkt dort einen Unterdruck, sodass Luft aus der Umgebung dorthin fließt. Vorliegend wird die Luft aus der Umgebung von der Öffnung im unteren Teil des Freizeitfahrzeugs geliefert.

Durch den Venturi-Effekt und / oder den Kamineffekt wird vorliegend vorteilhafterweise erreicht, dass das Freizeitfahrzeug durch die Öffnung in dem Einbaurahmenelement in der Regel entlüftet und nicht belüftet wird.

Gemäß noch einer weiteren, bevorzugten Ausführungsform ist das Einbaurahmenelement einstückig ausgeführt. Hierdurch wird vorteilhafterweise erreicht, dass das Einbaurahmenelement einfach zu handhaben ist und in einfacher Art und Weise als Fertigbauteil eingebaut werden kann, insbesondere mit anderen Elementen des Einbaurahmens gebunden werden kann.

Gemäß einer anderen Ausführungsform ist das Einbaurahmenelement ausgeführt und eingerichtet, auf einem Dach des Freizeitfahrzeugs befestigt, insbesondere verklebt, zu werden. Hierdurch wird vorteilhafterweise der Venturi-Effekt und / oder der Kamineffekt verstärkt, so dass der Entlüftungseffekt verstärkt wird.

Bevorzugt wird das als Formteil hergestellte Einbaurahmenelement insbesondere an einer Unterseite oder an einer vorgesehenen Kontaktfläche mit dem Freizeitfahrzeug mechanisch bearbeitet, insbesondere gefräst, so dass eine Kontur der Unterseite oder der Kontaktfläche mit dem Freizeitfahrzeug einer Kontur des Freizeitfahrzeugs entspricht. Hierdurch wird vorteilhafterweise erreicht, dass ein einziges hergestelltes Formteil an unterschiedlichste Freizeitfahrzeuge angepasst werden kann.

Gemäß noch einer anderen, bevorzugten Ausführungsform ist eine erste Seite der ersten Kammer, welche bei bestimmungsgemäßem Gebrauch des Einbaurahmenelements eine Unterseite der ersten Kammer bildet, geöffnet. Hierbei wird bei bestimmungsgemäßem Gebrauch des Einbaurahmenelements die erste Seite der ersten Kammer durch einen Teil des Dachs des Freizeitfahrzeugs verschlossen. Bevorzugt wird hierbei die Unterseite des Einbaurahmenelements auf die Oberseite des Dachs des Freizeitfahrzeugs geklebt. Hierdurch wird vorteilhafterweise erreicht, dass das Einbaurahmenelement ressourcenschonend hergestellt oder verwendet werden kann.

Gemäß einer weiteren, bevorzugten Ausführungsform ist die erste Kammer eine Ablauföffnung, welche so ausgeführt und eingerichtet ist, dass Wasser, insbesondere Wasser, welches durch eine erste Entlüftungsöffnung in die erste Kammer eingedrungen ist, durch die Ablauföffnung aus der ersten Kammer heraus, insbesondere nach außerhalb des Freizeitfahrzeugs ablaufen kann. Hierdurch wird vorteilhafterweise erreicht, dass Wasser nicht in das Innere des Freizeitfahrzeugs eindringen kann.

Es ist weiterhin bevorzugt, dass die Ablauföffnung in einer Wandung der ersten Kammer angeordnet ist. Alternativ oder zusätzlich kann die Ablauföffnung bei bestimmungsgemäßem Gebrauch des Einbaurahmenelements durch eine Ausnehmung an einem unteren Ende des Einbaurahmenelements, insbesondere einer Wandung des Einbaurahmenelements, und einem Teil des Daches des Freizeitfahrzeugs gebildet werden. Hierdurch, insbesondere durch das letztgenannte Merkmal, wird vorteilhafterweise erreicht, dass eine Ablauföffnung für Wasser in einfacher Art und Weise sowie ressourcenschonend, z.B. durch geeignete Befräsung der Unterseite des Einbaurahmenelements, in dem Einbaurahmenelement angeordnet werden kann.

Gemäß einer weiteren, bevorzugten Ausführungsform ist das Einbaurahmenelement bei bestimmungsgemäßem Gebrauch an einem heckseitigen Ende des Einbaurahmens für das Hubdach, an einem heckseitigen Ende des Hubdachs und/oder an einem heckseitigen Ende des Dachs angeordnet. Ein heckseitiges Ende eignet sich vorteilhafterweise besonders zur Anordnung des Einbaurahmenelements, da hier günstige strömungstechnische Bedingungen vorliegen, welche ein Ausströmen von Gasen, vorliegend Kohlenmonoxid oder Kohlendioxid, besonders bevorzugen.

Somit kann das Einbaurahmenelement bevorzugt ein Heckspoiler oder ein Dachhaubenspoiler sein.

Gemäß noch einer weiteren, bevorzugten Ausführungsform weist das Einbaurahmenelement ferner eine zweite Kammer auf. Hierbei weist die zweite Kammer eine dritte Wandung auf, welche Teil der Außenwandung des Einbaurahmenelements ist und in welcher mindestens eine dritte Entlüftungsöffnung angeordnet ist. Ferner weist die zweite Kammer eine vierte Wandung auf, in welcher eine vierte Entlüftungsöffnung angeordnet ist, welche bei bestimmungsgemäßem Gebrauch des Einbaurahmenelements die zweite Kammer mit einem Innenraum des Freizeitfahrzeugs verbindet. Hierbei ist die zweite Kammer so ausgeführt und eingerichtet, dass bei bestimmungsgemäßem Gebrauch des Einbaurahmenelements Luft von dem Innenraum des Freizeitfahrzeugs durch die vierte Entlüftungsöffnung der vierten Wandung der zweiten Kammer und durch die mindestens eine dritte Entlüftungsöffnung der dritten Wandung nach außerhalb des Freizeitfahrzeugs strömen kann.

Es ist weiterhin bevorzugt, dass die erste Kammer und die zweite Kammer symmetrisch zu einer Mittelebene des Einbaurahmenelements angeordnet sind. Bevorzugt verläuft die Mittelebene des Einbaurahmenelements senkrecht zur Außenwandung des Einbaurahmenelements, zu einer Längsachse des Einbaurahmenelements oder zu einer Seite des Einbaurahmens, welche das Einbaurahmenelement bildet.

In einem weiteren Aspekt wird die Erfindung gelöst durch einen Einbaurahmen für ein Hubdach eines Freizeitfahrzeugs mit einem oben beschriebenen Einbaurahmenelement.

Durch die Integration der Entlüftung in das Einbaurahmenelement funktioniert diese auch zuverlässig bei geschlossenem Hubdach. Auch kann die Anordnung im Regelfall nicht durch eine Matratze unbeabsichtigt blockiert werden.

In einem weiteren Aspekt wird die Erfindung gelöst durch ein Freizeitfahrzeug mit einem oben beschriebenen Einbaurahmenelement und/oder einem oben beschriebenen Einbaurahmen.

Ausführungsbeispiele der Erfindung sind in den Zeichnungen dargestellt und werden in der nachfolgenden Beschreibung näher erläutert.
- Figur 1: zeigt in einer dreidimensionalen Ansicht eine Einbauposition eines erfindungsgemäßen Einbaurahmenelements auf einem Dach eines Freizeitfahrzeugs mit Hubdach.
- Figur 2: zeigt das Einbaurahmenelement der Figur 1 in einer Ansicht von oben.
- Figuren 3 und 4: zeigen jeweils das Einbaurahmenelement der Figuren 1 oder 2 in einer Ansicht von unten.

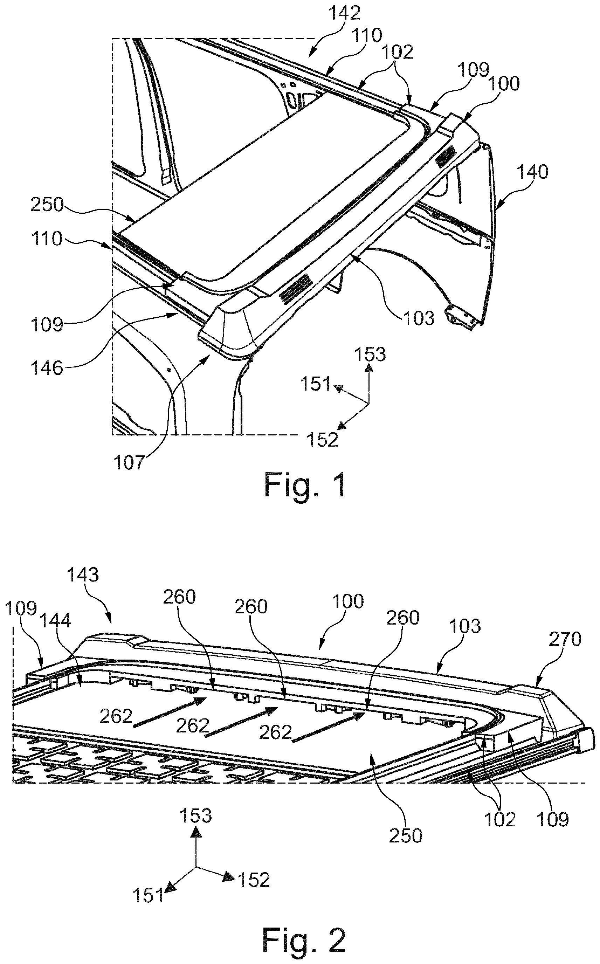

Die Figur 1 zeigt ein auf einem Dach 146 eines Freizeitfahrzeugs 140 befestigtes Einbaurahmenelement 100, welches einen Teil eines Einbaurahmens 102 für ein Hubdach 142 des Freizeitfahrzeugs 140 bildet. Das als Formteil einstückig ausgeführte Einbaurahmenelement 100 wird auf dem Dach 146 des Freizeitfahrzeugs 140 verklebt. Das Einbaurahmenelement 100 weist eine Zwangsentlüftung eines Innenraums 120 des Freizeitfahrzeugs 140 auf.

Von dem Freizeitfahrzeug 140 ist lediglich ein Teil der Karosserie abgebildet. Das Hubdach 142 ebenfalls nicht vollständig abgebildet. Das Einbaurahmenelement 100 bildet vorliegend eine Seite 103 des Einbaurahmens 102, welche senkrecht zur Fahrtrichtung 151 des Freizeitfahrzeugs 140 und parallel zu einer Querachse 152 des Fahrzeugs von einer rechten zu einer linken Seite verläuft. Senkrecht zur Fahrtrichtung 151 und zur Querachse 152 verläuft eine von unten nach oben verlaufende Hochachse 153.

Das Einbaurahmenelement 100 weist zwei Befestigungselemente 109 auf, welche jeweils an einem parallel zur Fahrtrichtung 151 verlaufendem benachbarten Einbaurahmenelement 110 befestigt werden.

Die Figur 2 zeigt eine Ansicht des heckseitigen Endes 143 des Hubdachs 142 an einem heckseitigen Ende des Dachs 146, wo das Einbaurahmenelements 100 auf dem Dach 146 verklebt ist.

In der Figur 2 erkennt man Luftströmungen 240, welche vom Inneren des Hubdachs 142 über einen Dachelement 250 in Zwischenräume 260 zwischen dem Dachelement 250 und dem Einbaurahmenelement 100 strömen, was mit Pfeilen 262 gekennzeichnet ist. Ein nicht dargestelltes Dachverkleidungselement endet auf der Höhe eines oberen Endes 270 des Einbaurahmenelements 100. Am heckseitigen Ende 143 des Hubdachs befindet sich somit bis zu dieser Höhe Luft des Innenraums 144 des Freizeitfahrzeugs 100.

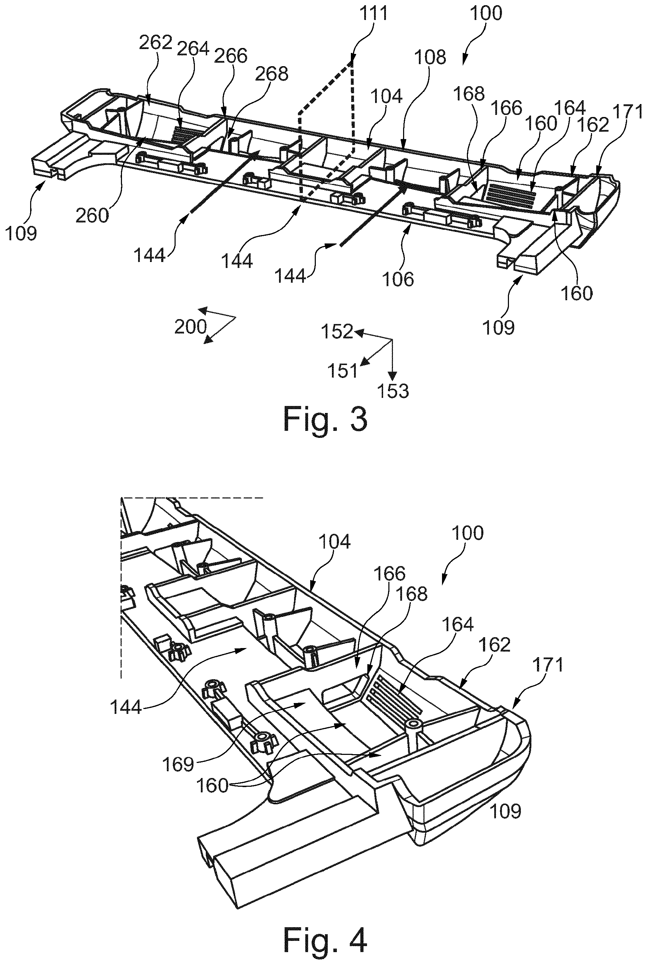

Das in der Figur 3 von einer Unterseite abgebildete Einbaurahmenelement 100 weist eine erste Kammer 160 auf, welche in Verbindung mit dem Dach 146 des Freizeitfahrzeugs 140 einen im Wesentlichen geschlossenen Hohlraum bildet. Der Hohlraum weist lediglich Öffnungen zur Entlüftung sowie zum Ablauf von Wasser auf. In Figur 4 ist zu sehen, dass eine erste Seite 169 der ersten Kammer 160, welche eine Unterseite der ersten Kammer 160 bildet, geöffnet ist, wobei die erste Seite 169 der ersten Kammer 160 durch einen Teil des Dachs 146 des Freizeitfahrzeugs 140 verschlossen wird.

Die Figur 4 zeigt eine Ansicht des in Figur 3 abgebildeten Einbaurahmenelements 100 in einer anderen Perspektive, welche insbesondere die zweite Wandung 166 mit der zweiten Entlüftungsöffnung 168 besser zeigt. In Figur 4 ist lediglich die erste Kammer 160 mit Bezugszeichen versehen.

Die Kammer 160 weist eine erste Wandung 162 auf, die Teil einer Außenwandung 104 des Einbaurahmenelements 100 ist und in welcher vier erste Entlüftungsöffnungen 164 angeordnet sind. Die Außenwandung 104 weist relativ zur vertikal verlaufenden Hochachse 153 einen Winkel von ungefähr 45° auf.

Die Kammer 160 weist eine zweite Wandung 166 auf, in welcher eine zweite Entlüftungsöffnung 168 angeordnet ist, welche die erste Kammer 160 mit einem Innenraum 144 des Freizeitfahrzeugs 140 verbindet.

Ein Winkel zwischen einer Erstreckungsrichtung der ersten Wandung 162 in einer Einbauebene 200 des Einbaurahmenelements 100 und einer Erstreckungsrichtung der zweiten Wandung 166 in der Einbauebene 200 des Einbaurahmenelements 100 beträgt 90°. Die Einbauebene 200 wird durch die Fahrtrichtung 151 und die Querachse 152 aufgespannt. Ein Winkel zwischen einer ersten Richtung, welche senkrecht zur ersten Wandung 162 und parallel durch eine erste Entlüftungsöffnung 164 verläuft, und einer zweiten Richtung, welche senkrecht zur zweiten Wandung 166 und parallel durch die zweite Entlüftungsöffnung 168 verläuft, beträgt ebenfalls 90°. Ferner ist die erste Kammer 160 so ausgeführt und eingerichtet ist, dass Luft von dem Innenraum 144 des Freizeitfahrzeugs 140 durch die zweite Entlüftungsöffnung 168 der zweiten Wandung 166 der ersten Kammer und durch die mindestens eine Entlüftungsöffnung 164 der ersten Wandung 162 nach außerhalb des Freizeitfahrzeugs 140 strömen kann.

Ferner weist das Einbaurahmenelement 100 eine zweite Kammer 260 auf, welche relativ zu einer Mittelebene 111 symmetrisch zur ersten Kammer 160 angeordnet ist. Die zweite Kammer 260 weist eine dritte Wandung 262 auf, welche Teil der Außenwandung 104 des Einbaurahmenelements 100 ist und in welcher vier dritte Entlüftungsöffnungen 264 angeordnet sind. Die zweite Kammer 160 weist ferner eine vierte Wandung 266 auf, in welcher eine vierte Entlüftungsöffnung 268 angeordnet ist, welche die zweite Kammer 260 mit einem Innenraum 144 des Freizeitfahrzeugs 140 verbindet. Die zweite Kammer 260 ist hierbei so ausgeführt und eingerichtet ist, dass Luft von dem Innenraum 144 des Freizeitfahrzeugs 140 durch die vierte Entlüftungsöffnung 268 der vierten Wandung 266 der zweiten Kammer 260 und durch die dritten Entlüftungsöffnungen 264 der dritten Wandung 262 nach außerhalb des Freizeitfahrzeugs 140 strömen kann.

Ferner weist ein Luftkanal, welcher eine mit dem Innenraum 144 des Freizeitfahrzeugs 140 verbundene Innenseite 106 des Einbaurahmenelements 100 mit einer außerhalb des Freizeitfahrzeugs 140 befindliche Außenseite 108 des Einbaurahmenelements 100 verbindet, einen kleineren Querschnitt auf als eine Öffnung in einem unteren Teil des Freizeitfahrzeugs 140.

Gemäß dem Venturi-Effekt bewirkt dies, dass eine Luftströmung durch den Luftkanal im Einbaurahmenelement 100 schneller strömt als durch die Öffnung in dem unteren Teil des Freizeitfahrzeugs 140. Zusammen mit dem Kamineffekt, welcher warme Luft aus dem unteren Teil des Freizeitfahrzeugs 140 nach oben befördert, bewirkt dies, dass lediglich Luft aus dem Inneren 144 des Freizeitfahrzeugs 140 nach außerhalb strömt und keine Luft wieder zurück.

Die erste Kammer 160 weist ferner eine Ablauföffnung 171 auf, welche so ausgeführt und eingerichtet ist, dass Wasser, welches durch die ersten Entlüftungsöffnungen 164 in die erste Kammer 160 eingedrungen ist oder sich im Inneren der erste Kammer 160 aufgrund hoher Luftfeuchtigkeit gebildet hat, durch die Ablauföffnung 171 aus der ersten Kammer 160 heraus nach außerhalb des Freizeitfahrzeugs 140 ablaufen kann.

Hierbei wird die Ablauföffnung 171 durch eine Ausnehmung an einem unteren Ende der Wandung 162 des Einbaurahmenelements 100 und einem Teil des Daches 146 des Freizeitfahrzeugs 140 gebildet.

Die zweite Kammer 260 weist ebenso eine solche Ablauföffnung 271 auf.

## Patentansprüche

1. Einbaurahmenelement (100) mit Zwangsentlüftung eines Innenraums (120) eines Freizeitfahrzeugs (140), wobei das Einbaurahmenelement
(100) Teil eines Einbaurahmens (102) für ein Hubdach (142) des Freizeitfahrzeugs (140) ist; und
wobei das Einbaurahmenelement (100) aufweist:
eine erste Kammer (160) aufweisend:
eine erste Wandung (162), welche Teil einer Außenwandung (104) des Einbaurahmenelements (100) ist und in welcher mindestens eine erste Entlüftungsöffnung (164) angeordnet ist; und
eine zweite Wandung (166), in welcher eine zweite Entlüftungsöffnung (168) angeordnet ist, welche bei bestimmungsgemäßem Gebrauch des Einbaurahmenelements (100) die erste Kammer (160) mit einem Innenraum (144) des Freizeitfahrzeugs (140) verbindet;
wobei die erste Kammer (160) so ausgeführt und eingerichtet ist, dass bei bestimmungsgemäßem Gebrauch des Einbaurahmenelements (100) Luft von dem Innenraum (144) des Freizeitfahrzeugs (140) durch die zweite Entlüftungsöffnung (168) der zweiten Wandung (166) der ersten Kammer und durch die mindestens eine Entlüftungsöffnung (164) der ersten Wandung (162) nach außerhalb des Freizeitfahrzeugs (140) strömen kann.

2. Einbaurahmenelement (100) nach Anspruch 1,
**dadurch gekennzeichnet, dass**
ein Winkel zwischen einer Erstreckungsrichtung der ersten Wandung (162) in einer Einbauebene (200) des Einbaurahmenelements (100) und einer Erstreckungsrichtung der zweiten Wandung (166) in der Einbauebene (200) des Einbaurahmenelements (100) zwischen 80° und 100° liegt.

3. Einbaurahmenelement (100) nach Anspruch 1 oder 2,
**dadurch gekennzeichnet, dass**
ein Winkel zwischen einer ersten Richtung, welche senkrecht zur ersten Wandung (162) und parallel durch eine erste Entlüftungsöffnung (164) der mindestens einen ersten Entlüftungsöffnung (164) verläuft, und einer zweiten Richtung, welche senkrecht zur zweiten Wandung (166) und parallel durch die zweite Entlüftungsöffnung (168) verläuft, zwischen 80° und 100° liegt.

4. Einbaurahmenelement (100) nach einem der vorangegangenen Ansprüche,
**dadurch gekennzeichnet, dass**
ein Luftkanal, welcher eine mit dem Innenraum (144) des Freizeitfahrzeugs (140) verbundene Innenseite (106) des Einbaurahmenelements (100) mit einer außerhalb des Freizeitfahrzeugs (140) befindliche Außenseite (108) des Einbaurahmenelements (100) verbindet, einen kleineren Querschnitt aufweist als eine Öffnung in einem unteren Teil des Freizeitfahrzeugs (140).

5. Einbaurahmenelement (100) nach einem der vorangegangenen Ansprüche,
**dadurch gekennzeichnet, dass**
das Einbaurahmenelement (100) einstückig ausgeführt ist.

6. Einbaurahmenelement (100) nach einem der vorangegangenen Ansprüche,
**dadurch gekennzeichnet, dass**
das Einbaurahmenelement (100) ausgeführt und eingerichtet ist, auf einem Dach (146) des Freizeitfahrzeugs (140) befestigt, insbesondere verklebt, zu werden.

7. Einbaurahmenelement (100) nach einem der vorangegangenen Ansprüche,
**dadurch gekennzeichnet, dass**
das Einbaurahmenelement (100) mindestens eine Seite (103) des Einbaurahmens (102) für ein Hubdach (142) des Freizeitfahrzeugs (140) bildet.

8. Einbaurahmenelement (100) nach einem der vorangegangenen Ansprüche,
**dadurch gekennzeichnet, dass**
eine erste Seite (169) der ersten Kammer (160), welche bei bestimmungsgemäßem Gebrauch des Einbaurahmenelements (100) eine Unterseite der ersten Kammer (160) bildet, geöffnet ist, wobei bei bestimmungsgemäßem Gebrauch des Einbaurahmenelements (100) die erste Seite (169) der ersten Kammer (160) durch einen Teil des Dachs (146) des Freizeitfahrzeugs (140) verschlossen wird.

9. Einbaurahmenelement (100) nach einem der vorangegangenen Ansprüche,
**dadurch gekennzeichnet, dass**
die erste Kammer (160) eine Ablauföffnung (171), welche so ausgeführt und eingerichtet ist, dass Wasser, insbesondere Wasser, welches durch eine erste Entlüftungsöffnung (164) in die erste Kammer (160) eingedrungen ist, durch die Ablauföffnung (171) aus der ersten Kammer (160) heraus, insbesondere nach außerhalb des Freizeitfahrzeugs (140) ablaufen kann.

10. Einbaurahmenelement (100) nach dem vorangegangenen Anspruch, **dadurch gekennzeichnet, dass**
die Ablauföffnung (171) in einer Wandung der ersten Kammer (160) angeordnet ist und/oder bei bestimmungsgemäßem Gebrauch des Einbaurahmenelements (100) durch eine Ausnehmung an einem unteren Ende des Einbaurahmenelements (100), insbesondere einer Wandung (162) des Einbaurahmenelements (100), und einem Teil des Daches (146) des Freizeitfahrzeugs (140) gebildet wird.

11. Einbaurahmenelement (100) nach einem der vorangegangenen Ansprüche,
**dadurch gekennzeichnet, dass**
das Einbaurahmenelement (100) bei bestimmungsgemäßem Gebrauch an einem heckseitigen Ende (107) des Einbaurahmens (102) für das Hubdach (142), an einem heckseitigen Ende des Hubdachs (142) und/oder an einem heckseitigen Ende des Dachs (146) angeordnet ist.

12. Einbaurahmenelement (100) nach einem der vorangegangenen Ansprüche,
ferner aufweisend:
eine zweite Kammer (260) aufweisend:
eine dritte Wandung (262), welche Teil der Außenwandung (104) des Einbaurahmenelements (100) ist und in welcher mindestens eine dritte Entlüftungsöffnung (264) angeordnet ist; und
eine vierte Wandung (266), in welcher eine vierte Entlüftungsöffnung (268) angeordnet ist, welche bei bestimmungsgemäßem Gebrauch des Einbaurahmenelements (100) die zweite Kammer (260) mit einem Innenraum (144) des Freizeitfahrzeugs (140) verbindet;
wobei die zweite Kammer (260) so ausgeführt und eingerichtet ist, dass bei bestimmungsgemäßem Gebrauch des Einbaurahmenelements (100) Luft von dem Innenraum (144) des Freizeitfahrzeugs (140) durch die vierte Entlüftungsöffnung (268) der vierten Wandung (266) der zweiten Kammer (260) und durch die mindestens eine dritte Entlüftungsöffnung (264) der dritten Wandung (262) nach außerhalb des Freizeitfahrzeugs (140) strömen kann.

13. Einbaurahmenelement (100) nach dem vorangegangenen Anspruch,
**dadurch gekennzeichnet, dass**
die erste Kammer (160) und die zweite Kammer (260) symmetrisch zu einer Mittelebene (111) des Einbaurahmenelements (100) angeordnet sind.

14. Einbaurahmen (102) für ein Hubdach (142) eines Freizeitfahrzeugs (140) mit einem Einbaurahmenelement (100) nach einem der vorangegangenen Ansprüche.

15. Freizeitfahrzeug (140) mit einem Einbaurahmenelement (100) nach einem der Ansprüche 1 bis 13 und/oder einem Einbaurahmen (102) nach dem vorangegangenen Anspruch.
